# EUROPÄISCHE PATENTSCHRIFT

(11) **EP 1 071 075 B1**
(45) Veröffentlichungstag und Bekanntmachung des Hinweises auf die Patenterteilung: **04.10.2006**
(21) Anmeldenummer: 00115132.3
(22) Anmeldetag: 12.07.2000
(51) Int. Cl.: G10L 15/22

(54) **Verfahren und Vorrichtung zur Eingabe von Daten**
Method and apparatus for data input
Procédé et dipositif pour l'entrée de données

(30) Priorität: 16.07.1999 DE 19933524
(43) Veröffentlichungstag der Anmeldung: 24.01.2001
(73) Patentinhaber: Nokia Corporation, 02150 Espoo (FI)
(72) Erfinder: Theimer, Wolfgang, 44879 Bochum (DE); Görtz, Udo, 44797 Bochum (DE); Serafat, Reza, 44789 Bochum (DE); Rateitscheck, Klaus, 44867 Bochum (DE); Buth, Peter, 44795 Bochum (DE); Dufhues, Frank, 44866 Wattenscheid (DE); Drüke, Thomas, 44803 Bochum (DE); Imam, Amir, 44801 Bochum (DE); Steinert, Christian, 25485 Langeln (DE)
(74) Vertreter: Becker Kurig Straus

(56) Entgegenhaltungen:
- EP-A- 0 554 492
- EP-A- 0 865 014
- WO-A-98/25393
- DE-A- 19 717 601
- US-A- 5 572 423
- US-A- 5 710 866
- US-A- 5 895 447

## Beschreibung

Die Erfindung betrifft ein Verfahren zur Eingabe von Daten in ein System.

Mit der zunehmenden Weiterentwicklung der Informations- und Kommunikationstechnik entstehen immer mehr Informations-, Auskunfts- und Kommunikationssysteme, zu deren Bedienung und Nutzung es erforderlich ist, nicht nur einzelne Begriffe oder Befehle einzugeben, sondern auch komplette Datensätze. Derartige komplexe Dateneingaben erfordernde Systeme sind beispielsweise Navigationssysteme, die den Anwender von seinem Ausgangsort zu einem Zielort führen, Verkehrsinformationssysteme, E-Mail-Dienste oder dergleichen.

Da die für die Dateneingabe in ein System, beispielsweise in ein in einem Fahrzeug installierten Navigationssystem, zur Verfügung stehenden Eingabemittel meist auf einfache Tastaturen mit wenigen Tasten, wie zum Beispiel einem zwölfer Tastenblock, Drehdrücksteller, sogenannte Soft-Keys, also Tasten, deren Funktion ihnen in Abhängigkeit vom Programmverlauf zugewiesen wird, oder dergleichen beschränkt sind, ist die Eingabe von kompletten Datensätzen umständlich und zeitraubend.

Bei einem bekannten Navigationssystem ist es beispielsweise erforderlich, die postalische Adresse des Ziels mit Ortsnamen, Straße und Hausnummer einzugeben. Dazu steht ein Drehdrücksteller zur Verfügung, mit dessen Hilfe aus einer Liste von angezeigten Buchstaben einzelne Buchstaben ausgewählt und eingegeben werden können. Um hierbei dem Benutzer die Eingabe zu erleichtern, werden nach der Eingabe eines Buchstabens nur noch die Buchstaben angezeigt, die die bisherige Buchstabenfolge im Hinblick auf einen auszuwählenden, in der Datenbank des Navigationssystem gespeicherten Städte- oder Straßennamen sinnvoll ergänzen. Sobald dabei die eingegebene Buchstabenfolge nur noch einem möglichen Städte- oder Straßennamen entspricht, wird dieser automatisch ergänzt, so daß der Benutzer mit der Eingabe des nächsten Begriffs fortfahren kann, bis die für die Zielortbestimmung erforderlichen Daten eingegeben sind.

Ein derartiger Eingabedialog zwischen Navigationssystem und Benutzer ist jedoch ziemlich umständlich.

Um die Beschränkungen des Eingabedialogs durch die begrenzten taktilen Eingabemittel zu umgehen wurden auch schon auf einer Spracheingabe basierende Eingabedialoge vorgeschlagen.

Bei einem derartigen Dialog wird zunächst das Navigationssystem mit einem Sprachbefehl "Navigationssystem" aktiviert. Das System antwortet mit einer akustischen oder optischen Mitteilung "System bereit" und fordert dann den Benutzer mit einer Eingabeaufforderung "Bitte Städtenamen buchstabieren" auf, den Namen der gewünschten Stadt zu buchstabieren. Der Benutzer gibt daraufhin den Städtenamen zum Beispiel "E-R-D-I-N-G" als Buchstabenfolge ein. Das System meldet dann den erkannten Städtenamen "Erding" als Wort oder als Buchstabenfolge zurück und fordert den Benutzer zur Bestätigung der korrekten Eingabe auf. Falls das System die Eingabe fehlerhaft zurückmeldet, und der Benutzer mit dem Sprachbefehl "Nein" die erkannte Eingabe verwirft, kehrt der Eingabedialog zur Eingabe des Städtenamens zurück und fordert den Benutzer erneut auf, den Städtenamen zu buchstabieren.

Falls der Städtename richtig erkannt wurde, wiederholt sich der gleiche Vorgang für die Eingabe des Straßennamens und anschließend für die Eingabe der Hausnummer.

Obwohl bei einer derartigen Spracheingabe keine Beschränkungen durch Eingabemittel wie Tastatur oder Drehdrücksteller vorliegen, fehlen in Folge der strengen Dialogstruktur einfache Korrekturmittel. Außerdem sind die stets gleich bleibenden Sprachmitteilungen des Systems für einen geübten Benutzer lästig und zeitraubend.

WO-A2-98/25393 offenbart eine Verarbeitung von Daten in Abhängigkeit von Zuverlässigkeitswerten einer Spracheingabe und Wahrscheinlichkeitswerten, die eine erneute Verwendung eines Datensatzes beschreiben.

EP-A2-0865014 offenbart ein Verfahren zur Spracheingabe einer Zieladresse, bei dem mittels eines Abfragedialogs die Anzahl der Einträge in einer Mehrdeutigkeitslite verringert wird.

Davon ausgehend liegt der Erfindung die Aufgabe zugrunde, ein Verfahren zur Eingabe von Daten in ein System bereit zu stellen, das die Eingabe, insbesondere die Spracheingabe von Daten in das System vereinfacht und somit die Nutzung des Systems erleichtert und beschleunigt.

Diese Aufgabe wird erfindungsgemäß durch das Verfahren nach Anspruch 1 sowie die Vorrichtung nach Anspruch 16 gelöst.

Erfindungsgemäß ermittelt also das System auf eine Eingabe des Benutzers hin einen oder mehrere zu dieser Eingabe möglichst genau passende Begriffe als erkannte Begriffe, stellt zu jedem dieser erkannten Begriffe einen Zuverlässigkeitswert fest und behandelt oder verarbeitet die einer Eingabe zugeordneten Begriffe unter Berücksichtigung ihrer Zuverlässigkeitswerte weiter. Der Zuverlässigkeitswert ist dabei vorteilhafterweise ein Wert aus einem Intervall zwischen einer einer sicheren Erkennung entsprechenden Zahl, vorzugsweise 1, und der einer nicht erkennbaren Eingabe entsprechenden 0 einschließlich dieser Werte.

Die Zuverlässigkeitswerte (Confidence Value) beschreiben dabei den Grad der Übereinstimmung des erkannten Begriffs mit der Eingabe. Die Bestimmung des Zuverlässigkeitswertes bzw. des Confidence Values ist aus dem Stand der Technik allgemein bekannt und kann zum Beispiel in dem Buch "Fundamentals of Speech Regognition", L. Rabiner, B.-H. Juang, 1993, Prentice Hall PTR, 1993, Engelwood Cliffs, Kapitel 4 nachgelesen werden.

Nach der Spracheingabe eines Begriffs entweder als Wort oder als Zeichenfolge liegt also nicht nur ein einzelner Begriff vor, sondern es werden eine Reihe von der Eingabe zugeordneten Begriffe festgestellt, die dann in Abhängigkeit von den Zuverlässigkeitswerten weiter behandelt, also zum Beispiel angezeigt oder angesagt werden können.

Bei einer ersten Ausgestaltung der Erfindung werden die erkannten Begriffe einem Benutzer, beginnend mit dem am zuverlässigsten erkannten Begriff entsprechend ihren Zuverlässigkeitswerten als Systemrückmeldung angesagt und / oder angezeigt. Hierdurch wird dem Benutzer die Auswahl des richtigen Begriffs aus den erkannten Begriffen ermöglicht.

Dem Benutzer wird also nicht nur ein einziger erkannter Begriff auf seine Eingabe hin mitgeteilt, sondern er erhält die Möglichkeit, falls der zuerst genannte Begriff falsch ist, den richtigen aus den weiteren erkannten Begriffen herauszusuchen. Erst wenn keiner der erkannten Begriffe mit der vom Benutzer beabsichtigten Eingabe übereinstimmt, muß die Eingabe also wiederholt werden.

Dient die Eingabe in ein System zur Auswahl eines aus einer Mehrzahl von Begriffen oder Daten bestehenden Datensatzes aus einer Mehrzahl von im System gespeicherten Datensätzen, so ist bei einer vorteilhaften Weiterbildung der Erfindung vorgesehen, daß für jeden erkannten Begriff aus einer Liste gespeicherter Datensätze die Datensätze herausgesucht werden, die zu den erkannten Begriffen passen.

Bei der Eingabe von Begriffen oder Daten entsprechend einer formularartigen Dialogstruktur ist es dabei besonders vorteilhaft, wenn die Eingabe mit einem zum erkannten Begriff passenden Datensatz vervollständigt wird. Soll also beispielsweise bei der Zielorteingabe in ein Navigationssystem eine Adresse eingegeben werden, die bereits in einem persönlichen Adreßbuch gespeichert ist, so wird beispielsweise zunächst ein dieser Adresse zugeordneter Name eingegeben, und anschließend zum erkannten Namen der entsprechende Datensatz, also die entsprechende Adresse herausgesucht und das Formular mit den Angaben des Datensatzes ergänzt.

Das Vervollständigen des Dialogformulars kann dabei automatisch erfolgen, sobald nach der Eingabe eines oder mehrerer Begriffe, beispielsweise "Müller", "Hamburg" nur noch ein Datensatz auf die eingegebenen Begriffe paßt. Erfindungsgemäß ist es jedoch bevorzugt, daß die Vervollständigung der Dateneingabe auf ein Anforderungssignal hin erfolgt. Bei der Erfindung ist vorgesehen, daß die Anzahl der gefundenen Datensätze durch Eingabe eines oder mehrerer weiteren Begriffe verringerbar ist.

Die Erfindung zeichnet sich dadurch aus, daß jedem gespeicherten Datensatz ein Wahrscheinlichkeitswert zugeordnet ist, der die Wahrscheinlichkeit einer erneuten Verwendung des Datensatzes beschreibt. Dieser Wahrscheinlichkeitswert für einen Datensatz entspricht dem Verhältnis der Anzahl von Verwendungen dieses Datensatzes relativ zu der Gesamtzahl von Verwendungen aller Datensätze.

Für den Fall, daß das System auf eine Eingabe hin mehrere Begriffe erkennt, denen jeweils ein oder mehrere Datensätze zugeordnet sind, ist ferner vorgesehen, daß eine Ansage /Anzeigereihenfolge für die Datensätze in Abhängigkeit von ihren Wahrscheinlichkeitswerten und dem oder den Zuverlässigkeitswerten des oder der zugeordneten Begriffe festgelegt wird.

Passen also beispielsweise mehrere gespeicherte Datensätze auf einen erkannten Begriff, so wird zunächst der Datensatz angezeigt, dessen Wahrscheinlichkeitswert der Höchste ist. Dies ermöglicht einem Benutzer eines Navigationssystems, der mehrere Adressen unter dem Namen "Müller" gespeichert hat, die Adresse des/der Herrn/Frau Müller, den/die er am häufigsten besucht einfach durch die Eingabe des Begriffs "Müller" für die Eingabe des aktuell gewünschten Zielorts in das Navigationssystem auszuwählen. Will der Benutzer eine andere unter dem Begriff "Müller" als Datensatz gespeicherte Adresse als Zielort eingeben, so braucht er dann entweder nur in den ermittelten Datensätzen zu blättern oder er kann vorab einen weiteren, den Datensatz der gewünschten Adresse genauer spezifizierenden Begriff eingeben.

Zweckmäßigerweise werden dabei die erkannten Begriffe oder gefundenen Datensätze einzeln nacheinander oder als Auswahlliste zur Bestätigung oder Auswahl angesagt und/oder angezeigt.

Bei einer Sprecheingabe ist es besonders vorteilhaft, wenn der Zuverlässigkeitswert bei der Spracherkennung in üblicher Weise festgestellt wird.

Um bei einer Spracheingabe die Zuverlässigkeit der Spracherkennung zu verbessern, ist bei einer anderen Weiterbildung der Erfindung vorgesehen, daß die Spracheingabe eines Benutzers zunächst einer Sprechererkennung unterworfen wird, und daß die anschließende Spracherkennung unter Berücksichtigung des Ergebnisses der Sprechererkennung ausgeführt wird.

Bei einer anderen Ausgestaltung der Erfindung ist vorgesehen, daß die Eingabe über eine alphanumerische Eingabeeinrichtung erfolgt, wobei den so eingegebenen Begriffen zunächst der Zuverlässigkeitswert für eine sichere Erkennung zugewiesen wird.

Da jedoch auch bei einer alphanumerischen Eingabe von Begriffen über eine Tastatur oder andere taktile Eingabemittel unterschiedliche Eingabe oder Tippfehler, wie zum Beispiel Zahlen- oder Buchstabendreher oder dergleichen häufig auftreten können, ohne daß der die Eingabe ausführende Benutzer diese gleich erkennt, ist es besonders zweckmäßig, wenn einem fehlerhaft alphanumerisch eingegebenen Begriff, der bereits häufig benutzerspezifisch fehlerhaft eingegeben wurde, ein in Abhängigkeit von einer Eingabe spezifischen Fehlerstatistik ein kleinerer Zuverlässigkeitswert zugewiesen wird. Darüber hinaus ist es zweckmäßig, wenn ein derartiger fehlerhaft alphanumerisch eingegebener Begriff automatisch korrigiert wird, wobei dem korrigierten Begriff ein Zuverlässigkeitswert zugeordnet wird, der kleiner als der Zuverlässigkeitswert für eine sichere Erkennung ist.

Bei einer anderen Ausgestaltung der Erfindung ist vorgesehen, daß die Eingabe eine Bildeingabe ist.

Die Erfindung wird im folgenden beispielsweise anhand der Zeichnung näher erläutert. In dieser zeigt:
**Figur 1** ein schematisches Blockschaltbild einer Benutzerschnittstelle zur Durchführung des erfindungsgemäßen Verfahrens mit verschiedenen angeschlossenen Anwendungen,
**Figur 2** ein schematisches vereinfachtes Flußdiagramm einer ersten Ausgestaltung des Verfahrens und
**Figur 3** ein schematisches vereinfachtes Flußdiagramm eines zweiten Ausführungsbeispiels des erfindungsgemäßen Verfahrens.

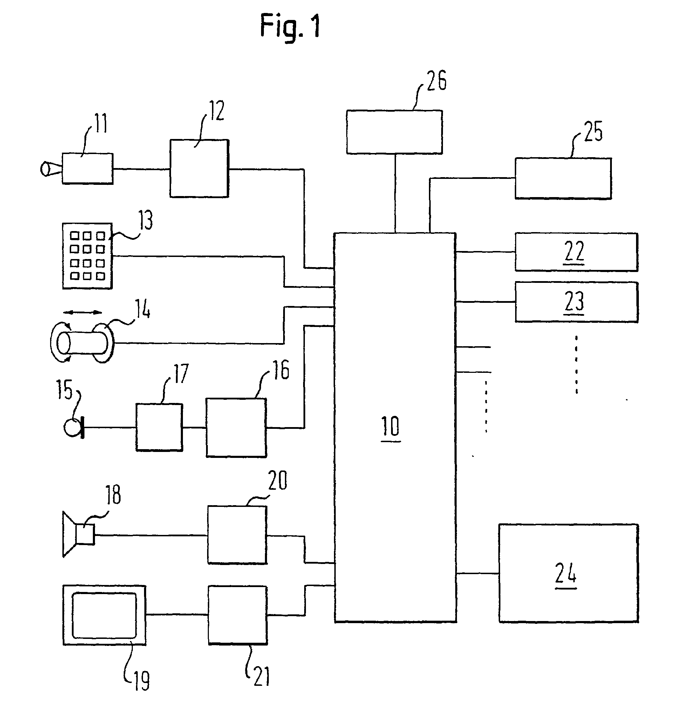

Wie in Figur 1 schematisch dargestellt ist, sind an eine Verarbeitungsschaltung 10 einer Benutzerschnittstelle als Eingabemittel eine Videokamera 11 mit einer nachgeschalteten Bilderkennung 12, eine Tastatur 13, die beispielsweise ein Zwölfer-Tastenblock sein kann, ein Drehdrücksteller 14 und ein Mikrofon 15 mit einer zugeordneten Spracherkennung 16 angeschlossen. Zur Erhöhung der Zuverlässigkeit der Spracherkennung ist dabei vorteilhafterweise zwischen dem Mikrofon 15 und der Spracherkennung 16 eine Sprechererkennung 17 zwischen geschaltet, die dem vom Mikrofon 15 gelieferten Sprachsignal ein Sprechersignal zuordnet, mit dessen Hilfe das Sprachsignal in der Spracherkennung 16 unter Berücksichtigung der spezifischen Sprechereigenschaften verarbeiten werden kann.

Als Ausgabemittel sind an die Verarbeitungsschaltung 10 ein Lautsprecher 18 und als optisches Anzeigemittel ein Monitor 19 über einen Treiber 20 für akustische Signale bzw. einen Treiber 2 1 tür optische Signale angeschlossen.

Die Verarbeitungsschaltung 10 ist ferner mit Anwendungen 22, 23 verbunden, die beispielsweise ein Navigationssystem, ein Straßeninformationssystem, ein E-Mail-Dienst, ein Fax-Dienst, ein Mobilfunkdienst oder dergleichen sein können. Jeder Anwendung 22, 23 kann dabei eine eigene Datenbank für in der Anwendung zu benutzende Datensätze vorgesehen sein. Die verschiedenen Datenbänke können dabei entweder auf einem anwendungsspezifischen Speicher oder wie bei der dargestellten Benutzerschnittstelle in einem entsprechenden Datenspeicher 24 gespeichert sein. Besonders zweckmäßig ist es, wenn eine Datenbank vorgesehen wird, deren Datensätze von mehreren Anwendungen verwendet werden können. Beispielsweise können die Datensätze einer derartigen Datenbank neben dem Namen und der Telefonnummer einer Person auch deren Postanschrift, also Wohnort, Straße, Hausnummer sowie die entsprechenden GPS Daten aufweisen. Ein derartiger Datensatz könnte auch statistische Daten enthalten, die beispielsweise angeben, wie häufig die entsprechende Person angerufen wurde, oder wie häufig dieser Datensatz für eine Routenplanung zum Wohnort der Person benutzt wurde.

Daneben ist es auch möglich, anwendungsspezifische statistische Daten in einem Speicherbereich 25 für anwendungsstatistische Daten, die beispielsweise für jeden Datensatz die absolute und die relative Verwendungshäufigkeit enthalten. Ferner kann ein Speicherbereich 26 vorgesehen sein, in dem benutzerspezifische Eingabefehler und deren Häufigkeit gespeichert sind.

Hier ist es beispielsweise möglich, bestimmte Tippfehler, zum Beispiel Zahlendreher und deren Häufigkeit zu speichern, also zu speichern, daß bei einer Eingabe über die Tastatur 13 oder den Drehdrücksteller 14 häufig anstelle von "98" "89" eingegeben wird. Ist dabei durch statistische Betrachtung bekannt, daß eine Eingabe "89" mit einer relativen Häufigkeit von zum Beispiel 65 % in "98" geändert wird, so kann eine derartige Korrektur automatisch vorgenommen werden und gleichzeitig dem so geänderten Begriff "98" ein Zuverlässigkeitswert von 0,65 zugeordnet werden. Andererseits ist es möglich, bei einem Wert dessen Änderungshäufigkeit unter 50 %, beispielsweise bei 45 % liegt, diesen Wert zu belassen und ihm einen Zuverlässigkeitswert zuzuordnen, der beispielsweise 0,55 ist.

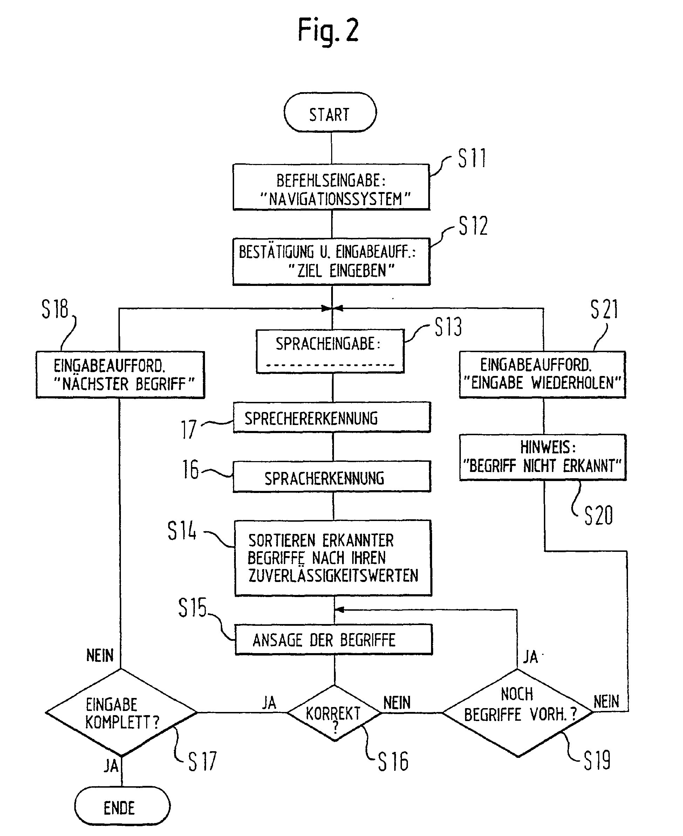

Ein erstes Ausführungsbeispiel des Verfahrens zur Eingabe von Daten in ein System wird im folgenden beispielsweise anhand der Figur 2 näher erläutert. Als System wird dabei ein Navigationssystem beschrieben. Das Verfahren läßt sich jedoch auch bei anderen Systemen erfolgreich einsetzen, bei denen einzelne oder mehrere Begriffe eingegeben werden müssen, um in einer Datenbank abgelegte Datensätze auszuwählen oder in der Datenbank abzulegende Datensätze zu erstellen.

Will beispielsweise ein Benutzer, der Zugriff auf ein Routenplanungs- und Zielführungssystem oder Navigationssystem hat, auf dieses Navigationssystem zugreifen, so gibt er nach Einschalten des Systems den Befehl "Navigationssystem" ein (Schritt S11). Diese Eingabe kann entsprechend der jeweils realen Ausstattung einer Benutzerschnittstelle auf verschiedene Weise ausgeführt werden. Im folgenden wird hier nur die Spracheingabe beschrieben. Die grundsätzliche Struktur des Verfahrens ist jedoch unabhängig von der Eingabeart.

Sobald das Navigationssystem nach der Befehlseingabe von Schritt S11 bereit ist, gibt es im Schritt S12 als Bestätigung die Eingabeaufforderung "Ziel eingeben" an den Benutzer aus. Die Ausgabe kann dabei sowohl angesagt als auch angezeigt werden. Ansage und Anzeige können dabei auch gleichzeitig erfolgen. Im folgenden wird nur von Ansage gesprochen, wobei dadurch die alternative oder ergänzende Anzeige einer Ausgabe nicht ausgeschlossen wird.

Nachdem der Benutzer aufgefordert wurde, das Ziel für die von ihm gewünschte Routenplanung einzugeben, führt er im Schritt S13 die Spracheingabe durch. Dabei kann der Name des Ziels, zum Beispiel "Erding" als Buchstabenfolge "E-R-D-I-N-G" oder als gesprochenes "ERDING" eingegeben werden. Das während der Spracheingabe im Schritt S13 vom Mikrofon 15 aufgenommene akustische Signal wird als Sprachsignal zunächst einer Sprechererkennung 17 und anschließend einer Spracherkennung 16 zugeführt. Die Spracherkennung ermittelt dabei unter Berücksichtigung des Ergebnisses der Sprechererkennung in bekannter Weise die aufgrund der Eingabe erkannten Begriffe. Beispielsweise erkennt die Spracherkennung aus der Eingabe "ERDING" die Begriffe "Erding" mit einem Zuverlässigkeitswert von zum Beispiel 0,8, "Erting" mit einem Zuverlässigkeitswert von 0,7 und "Ärding" mit einem Zuverlässigkeitswert von 0,6. Im Schritt S14 werden die erkannten Begriffe dann nach ihren Zuverlässigkeitswerten sortiert. Anschließend erfolgt dann im Schritt S15 die Ansage der Begriffe in der Reihenfolge ihrer Zuverlässigkeitswerte. Der mit dem höchsten Zuverlässigkeitswert erkannte Begriff, hier also "Erding" mit 0,8 wird dabei als erster angesagt oder angezeigt. Im Schritt S 16 erfragt das System zum Beispiel mit Hilfe einer Eingabeaufforderung "ist 'Erding' korrekt" eine Bestätigung oder eine Abweisung des erkannten Begriffs.

Falls der Begriff korrekt ist und vom Benutzer durch eine entsprechende Spracheingabe bestätigt wurde, wird im Schritt S17 in Dialogform festgestellt, ob die Eingabe komplett ist, ob also sämtliche einzugebenden Begriffe eingegeben wurden, oder ob weitere Begriffe einzugeben sind. Im letzteren Fall wird im Schritt S18 mit der Eingabeaufforderung "nächster Begriff" der Benutzer aufgefordert, mit der Spracheingabe fortzufahren (Schritt S13).

Ist jedoch die Eingabe komplett, so wird die vollständige Eingabe an das Navigationssystem gesendet und der Eingabedialog abgeschlossen.

Ist der in Schritt S15 angesagte Begriff nicht der vom Benutzer gewünschte Begriff, so weist er diesen im Anschluß an die Bestätigungsanfrage in Schritt 16 mit "Nein" zurück, woraufhin im Schritt S19 überprüft wird, ob weitere Begriffe erkannt wurden. Ist dies der Fall, so wird im Schritt S15 der nächste Begriff angesagt.

Diese Vorgehensweise wird solange wiederholt, bis entweder ein erkannter Begriff vom Benutzer als zutreffend bestätigt wurde oder sämtliche Begriffe abgelehnt wurden. Anstelle der aufeinanderfolgenden Ansagen der erkannten Begriffe, können bei einer Anzeige auch sämtliche Begriffe in Form einer Auswahlliste angezeigt werden. Der Benutzer kann dann durch die Liste scrollen und den gewünschten Begriff direkt auswählen oder die Liste insgesamt als falsch abweisen.

Wurden nach der Ansage aller Begriffe alle als falsch verworfen, so verzweigt das Verfahren nach Schritt S19 zum Schritt S20, in dem der Hinweis "Begriff nicht erkannt" ausgegeben wurde. Anschließend wird die Eingabeaufforderung "Eingabe wiederholen" angesagt um dem Benutzer anzuzeigen, daß das System wieder bei Schritt S13 zur Spracheingabe zurückgekehrt ist.

In nicht näher dargestellter Weise hat der Benutzer nach jeder Eingabeaufforderung die Möglichkeit, einen Abbruchbefehl entweder als Sprachbefehl oder über eine entsprechende Abbruchtaste einzugeben. Als Abbruchbefehl kann dabei zum Beispiel ein Drücken des Drehdrückstellers 14 interpretiert werden.

In der beschriebenen Weise lassen sich nicht nur Zieleingaben für ein Navigationssystem vorteilhaft durchführen, sondern auch aus gespeicherten Datensätzen bestimmte Datensätze auswählen.

Das einfachste Beispiel hierfür ist ein persönliches Telefonbuch, daß elektronisch gespeichert ist. Es lassen sich aber auch komplexe Datensätze auswählen, um zum Beispiel die Zieleingabe bei einem Navigationssystem zu vereinfachen.

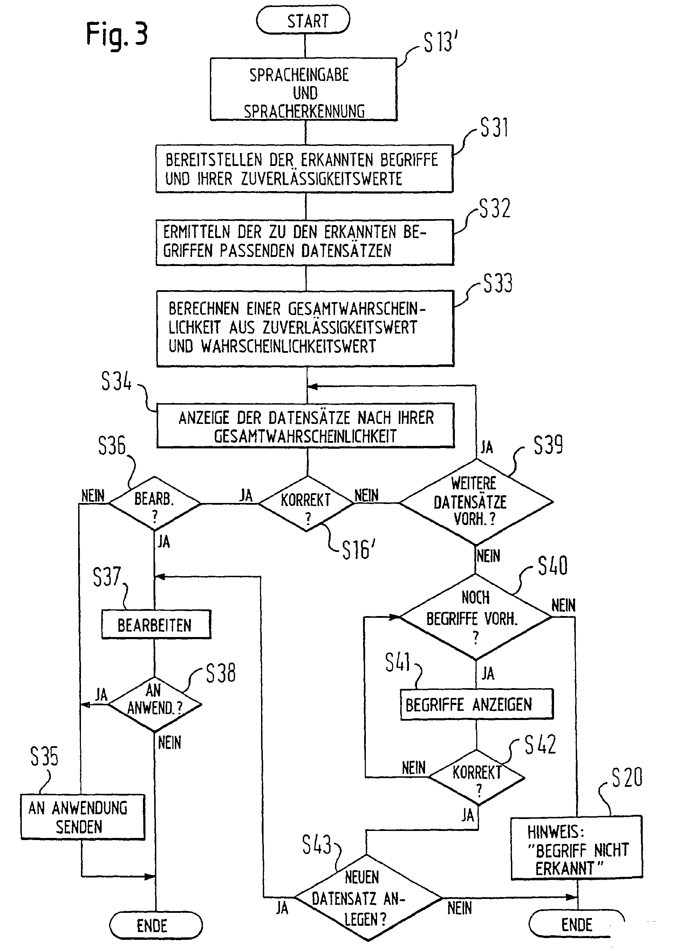

Ein derartiges erfindungsgemäßes Verfahren, bei dem ein Datensatz aus einer Vielzahl gespeicherter Datensätze auszuwählen ist, um ein Dialogformular einer Anwendung, also beispielsweise die Eingabeaufforderungen "Ort", "Straße" und "Hausnummer" bei der Zieleingabe in ein Navigationssystem auszufüllen, wird im folgenden anhand von Figur 3 erläutert. Nach dem Aktivieren der Anwendung (vgl. Schritte S11 und S12 in Figur 2) erfolgt in Schritt S13' die Spracheingabe und Spracherkennung. In Schritt S31 werden dann die aufgrund der Eingabe erkannten Begriffe und ihre Zuverlässigkeitswerte bereit gestellt, so daß im Schritt S32 aus der Datenbank die zu den erkannten Begriffen passenden Datensätze ermittelt werden können. Anschließend wird in Schritt S33 eine Gesamtwahrscheinlichkeit aus dem Zuverlässigkeitswert des erkannten Begriffs und dem Wahrscheinlichkeitswert des passenden Datensatzes berechnet.

Nachdem also ein Benutzer über vorgegebene Sprachbefehle, die von der Spracherkennung problemlos erkannt wurden, zur Zieleingabe den Namen "Müller" eingibt, um den Herrn/Frau Müller zugeordneten Datensatz für die Zieleingabe auszuwählen, erkennt die Spracherkennung den Begriff "Möller" mit einem Zuverlässigkeitswert von 0,9 und gleichzeitig aber auch den Begriff "Müller" mit einem Zuverlässigkeitswert von 0,8 sowie den Begriff "Mahler" mit einem Zuverlässigkeitswert von 0,5. Diese erkannten Begriffe werden zusammen mit ihren Zuverlässigkeitswerten also im Schritt S31 für die im Schritt S32 erfolgende Ermittlung der dazu passenden Datensätze bereitgestellt. Dabei wird beispielsweise zunächst herausgefunden, daß kein Mahler in den Datensätzen vorhanden ist. Für die Namen "Müller" und "Möller" existieren jedoch Datensätze, wobei aus den andwendungsspezifischen statistischen Daten heraus bekannt ist, daß beide Datensätze für Routenplanungen in der Vergangenheit verwendet wurden und daß im letzten Monat beispielsweise in 10 % aller Routenplanungen eine Route zu Herrn/Frau Möller und in 20 % aller Routenplanungen eine Route zu Herrn/Frau Müller berechnet wurde.

Diese Häufigkeitswerte werden den Datensätzen zugewiesen, so daß im Schritt S33 die Gesamtwahrscheinlichkeit berechnet werden kann. Für die Gesamtwahrscheinlichkeit, die angibt, welcher der ermittelten Datensätze mit welcher Wahrscheinlichkeit angefordert werden sollte, wird der Zuverlässigkeitswert des erkannten Begriffs mit der relativen Anwendungshäufigkeit des jeweiligen Datensatzes multipliziert. Im dargestellten Beispiel ergibt sich für den/die Herrn/Frau Möller zugeordneten Datensatz eine Gesamtwahrscheinlichkeit von 0,09, da der Zuverlässigkeitswert 0,9 mit einem Anwendungshäufigkeitswert 0,1 (10 %) multipliziert wird. In entsprechender Weise berechnet sich aus dem Zuverlässigkeitswert 0,8 und dem Anwendungshäufigkeitswert 0,2 (20 %) für den/die Herrn/Frau Müller zugeordneten Datensatz eine Gesamtwahrscheinlichkeit von 0,16.

Aufgrund der höheren berechneten Gesamtwahrscheinlichkeit, daß der Anwender eine Routenplanung zu Herrn/Frau Müller erhalten möchte, wird im Schritt S34, in dem die Datensätze nach ihrer Gesamtwahrscheinlichkeit geordnet angezeigt werden, zunächst der Datensatz von Herrn/Frau Müller verwendet, um als Zieladresse zu dienen. Nach dem im Schritt S16' vom Benutzer erkannt wurde, daß der angezeigte Datensatz von Herrn/Frau Müller der gewünschte ist, erfolgt eine Bestätigung durch einen Sprachbefehl oder über eine Bestätigungstaste. Aufgrund der Bestätigung kann der Datensatz unmittelbar an die Anwendung, also das Navigationssystem als Ziel zur Routenplanung übergeben werden (Schritt S35). Wie in Figur 3 jedoch dargestellt ist, kann vorher nochmals vom System in Schritt S36 abgefragt werden, ob der Datensatz bearbeitet werden soll. Ist dies der Fall, so erfolgt im Schritt S37 eine Bearbeitung des Datensatzes. Anderenfalls geht das Verfahren zu Schritt S35 weiter. Nach Abschluß der Bearbeitung kann dann in Schritt S38 zusätzlich noch überprüft werden, ob der bearbeitete Datensatz an das Navigationssystem gesendet werden soll oder lediglich zu speichern ist.

Sollte jedoch der Herrn/Frau Möller zugeordnete Datensatz nicht die gewünschte Zieladresse enthalten, so verzweigt das Verfahren in Schritt S16' zum Schritt S39 in dem geprüft wird, ob weitere Datensätze vorhanden sind. Ist dies hier im vorliegenden Beispiel der Fall, so wird im Schritt S34 der Datensatz für Herrn/Frau Möller angezeigt. Sollte auch dieser Datensatz nicht gewünscht sein, so wird im Schritt S39 erneut überprüft, ob weitere Datensätze vorhanden sind. Falls dies nicht der Fall ist, so wird im Schritt S40 überprüft, ob noch Begriffe erkannt wurden, zu denen keine Datensätze gefunden werden konnten. Falls dies, wie im Beispie,l der Fall ist, wird im Schritt S41 der Begriff angezeigt. Nach dem vom Benutzer im Schritt S42 der angezeigte Begriff als gewünscht bestätigt wurde, fragt das System im Schritt S43 ob ein neuer Datensatz angelegt werden soll. Falls dies der Fall ist, geht das Verfahren zum Schritt S37 weiter. Anderenfalls wird das Eingabeverfahren beendet.

Lehnt der Benutzer in Schritt S42 den angezeigten Begriff als nicht korrekt ab, so kehrt das Verfahren so lange zu Schritt S40 zurück, bis keine erkannten Begriffe mehr vorliegen. In diesem Fall wird dann entsprechend Schritt S20 ein Hinweis ausgegeben, der angezeigt, daß der Begriff nicht erkannt wurde, um dann das Eingabeverfahren zu beenden.

Nach Schritt S20 sowie nach Schritt S43 ist es jedoch auch möglich, zur Spracheingabe in Schritt S13' zurückzukehren, und den Benutzer zur erneuten Eingabe aufzufordern.

Um bei der Auswahl eines Datensatzes eine Liste von Datensätzen, die nach der Eingabe eines Begriffes gefunden wurde, zu reduzieren, ist es auch möglich, entsprechend dem anhand von Figur 3 erläuterten Verfahren einen weiteren Begriff einzugeben, und diesen nur noch in der bereits ermittelten Liste zu suchen. Wird beispielsweise der Name Müller richtig erkannt und sind dem Namen Müller mehrere Datensätze zugeordnet, so kann aus diesen Datensätzen der gewünschte durch eine Zusatzeingabe wir oben erläutert ermittelt werden.

Bei dem erfindungsgemäßen Verfahren besteht ferner die Möglichkeit, daß die Auswahl von Datensätzen aus einer Datenbank aufgrund eines oder mehrerer eingegebener Begriffe und das Ergänzen eines Eingabeformulars oder eines formularartigen Eingabedialogs erst dann erfolgt, wenn der Benutzer ein entsprechendes Anforderungssignal akustisch, optisch oder taktil über die Tastatur 13 oder den Drehsteller 14 eingibt. Hierdurch wird es dem Benutzer ermöglicht, von vornherein zwei oder mehr Begriffe einzugeben, um die Suche des gewünschten Datensatzes und die automatische Vervollständigung der Eingabe zu vereinfachen.

Anstelle der beschriebenen reinen Spracheingabe ist es auch möglich, eine kombinierte Sprach- und Tastatureingabe vorzunehmen. Hierbei kann der Zuverlässigkeitswert 1 für Tasteneingabe vom System herabgesetzt werden, falls aufgrund der eingabespezifischen Fehlerstatistik, die im Speicherbereich 26 gespeichert ist, bekannt ist, daß die Eingabe aufgrund häufig erkannter Tippfehler und/oder Zahlendreher des Anwenders eine gewisse Unsicherheit aufweist. Dabei ist es, wie oben bereits erläutert wurde, auch möglich Zahlen- oder Buchstabendreher und andere Tippfehler gegebenenfalls zu korrigieren.

Mit Hilfe der Videokamera 11 und der nachgeschalteten Bilderkennung 12 ist es möglich, einzelne Befehle sowie einzelne Buchstaben mit Hilfe von Gesten oder dergleichen einzugeben. Beispielsweise könnte eine offene Hand als Abbruchbefehl für eine Operation festgelegt werden. Über Start und Endpunkt einer Handbewegung lassen sich auch quantitative Werte erfassen, wobei den jeweils ermittelten Werten ebenfalls ein Zuverlässigkeitswert zugeordnet wird.

Das anhand von Figur 3 beschriebene erfindungsgemäße Verfahren ermöglicht es also, auch aufwendige Dialoge schnell und zuverlässig auszuführen, da aufgrund bereits gespeicherter Datensätze die aufgrund der angegebenen Begriffe ausgewählt werden, die Dialoge und Dialogformulare automatisch ergänzt werden, so daß der Benutzer einmal eingegebene Daten nicht ständig neu eingeben muß.

## Patentansprüche

1. Verfahren zur Eingabe von Daten in ein System, bei dem:
- auf Eingabe eines Benutzers hin ein oder mehrere zu dieser Eingabe möglichst genau passende Begriffe als erkannte Begriffe ermittelt werden, wobei die erkannten Begriffe jeweils mit einem gespeicherten Datensatz verknüpft sind, und jedem gespeichertem Datensatz ein Wahrscheinlichkeitswert zugeordnet ist, der die Wahrscheinlichkeit einer erneuten Verwendung des Datensatzes beschreibt,
- zu jedem dieser erkannten Begriffe ein Zuverlässigkeitswert festgestellt wird, der den Grad der Erkennung der Eingabe angibt und
- die einer Eingabe zugeordneten Begriffe unter Berücksichtigung ihrer Zuverlässigkeitswerte und der Wahrscheinlichkeitswerte weiter behandelt werden,
**dadurch gekennzeichnet, dass** eine Anzahl gefundener Datensätze entsprechend ihrer Zuverlässigkeitswerte durch Eingabe eines oder mehrerer weiterer Begriffe verringerbar ist.

2. Verfahren nach Anspruch 1, **dadurch gekennzeichnet, dass** der Zuverlässigkeitswert ein Wert aus einem Intervall zwischen einer einer sicheren Erkennung entsprechenden Zahl, vorzugsweise 1, und der einer nicht erkennbaren Eingabe entsprechenden Zahl, vorzugsweise 0, einschließlich dieser Werte ist.

3. Verfahren nach Anspruch 1 oder 2, **dadurch gekennzeichnet, dass** die erkannten Begriffe einen Benutzer beginnend mit dem am zuverlässigsten erkannten Begriff entsprechend ihrer Zuverlässigkeitswerte als Systemrückmeldung angesagt und/oder angezeigt werden.

4. Verfahren nach Anspruch 1 oder 2, **dadurch gekennzeichnet, dass** für jeden erkannten Begriff aus einer Liste gespeicherter Datensätze die Datensätze herausgesucht werden, die zu den erkannten Begriffen passen.

5. Verfahren nach Anspruch 4, **dadurch gekennzeichnet, dass** bei der Eingabe von Daten entsprechend einer formularartigen Dialogstruktur die Eingabe mit einem zum erkannten Begriff passenden Datensatz vervollständigt wird.

6. Verfahren nach Anspruch 5, **dadurch gekennzeichnet, dass** die Vervollständigung der Dateneingabe auf ein Anforderungssignal hin erfolgt.

7. Verfahren nach Anspruch 6, **dadurch gekennzeichnet, dass** der Wahrscheinlichkeitswert für einen Datensatz dem Verhältnis der Anzahl der Verwendungen dieses Datensatzes relativ zu der Gesamtzahl der Verwendungen aller Datensätze entspricht.

8. Verfahren nach Anspruch 6 oder 7, **dadurch gekennzeichnet, dass** eine Ansage/Anzeigereihenfolge für die Datensätze in Abhängigkeit von ihrem Wahrscheinlichkeitswert und dem Zuverlässigkeitswert des zugeordneten Begriffs festgelegt wird.

9. Verfahren nach einem der Ansprüche 2 bis 8, **dadurch gekennzeichnet, dass** die erkannten Begriffe einzeln nacheinander oder als Auswahlliste zur Bestätigung oder Auswahl angesagt und/oder angezeigt werden.

10. Verfahren nach einem der vorstehenden Ansprüche, **dadurch gekennzeichnet, dass**, wenn die Eingabe eine Spracheingabe ist, der Zuverlässigkeitswert in bei der Spracherkennung üblicher Weise festgestellt wird.

11. Verfahren nach Anspruch 10, **dadurch gekennzeichnet, dass** die Spracheingabe eines Benutzers zunächst einer Sprechererkennung unterworfen wird und dass die anschließende Spracherkennung unter Berücksichtigung des Ergebnisses der Sprechererkennung ausgeführt wird.

12. Verfahren nach Anspruch 1 bis 9, **dadurch gekennzeichnet, dass** die Eingabe über eine alphanumerische Eingabeeinrichtung erfolgt, wobei den so eingegebenen Begriffen zunächst der Zuverlässigkeitswert für eine sichere Erkennung zugewiesen wird.

13. Verfahren nach Anspruch 12, **dadurch gekennzeichnet, dass** einem fehlerhaft alphanumerisch eingegebenen Begriff, der bereits häufig benutzerspezifisch fehlerhaft eingegeben wurde, ein in Abhängigkeit von einer eingabespezifischen Fehlerstatistik kleinerer Zuverlässigkeitswert zugewiesen wird.

14. Verfahren nach Anspruch 12 oder 13, **dadurch gekennzeichnet, dass** ein fehlerhaft alphanumerisch eingegebener Begriff, der bereits häufig benutzerspezifisch fehlerhaft eingegeben wurde, automatisch korrigiert wird, wobei dem korrigierten Begriff ein Zuverlässigkeitswert zugeordnet wird, der kleiner als der Zuverlässigkeitswert für eine sichere Erkennung ist.

15. Verfahren nach Anspruch 1 bis 9, **dadurch gekennzeichnet, dass** die Eingabe eine Bildeingabe ist.

16. Vorrichtung, welche eingerichtet ist, ein Verfahren zur Eingabe von Daten auszuführen, mit :
- Mitteln zur Ermittlung, auf Eingabe eines Benutzers hin, eines oder mehrerer zu dieser Eingabe möglichst genau passenden Begriffe als erkannte Begriffe, wobei die erkannten Begriffe jeweils mit einem gespeicherten Datensatz verknüpft sind, und jedem gespeichertem Datensatz ein Wahrscheinlichkeitswert zugeordnet ist, der die Wahrscheinlichkeit einer erneuten Verwendung des Datensatzes beschreibt,
- Mitteln zur Feststellung eines Zuverlässigkeitswerts, zu jedem dieser erkannten Begriffe, der den Grad der Erkennung der Eingabe angibt, und
- Mitteln zur Weiterbehandlung der einer Eingabe zugeordneten Begriffe unter Berücksichtigung ihrer Zuverlässigkeitswerte und der Wahrscheinlichkeitswerte,
**dadurch gekennzeichnet, dass** eine Anzahl gefundener Datensätze entsprechend ihrer Zuverlässigkeitswerte durch Eingabe eines oder mehrerer weiterer Begriffe verringerbar ist.

17. Vorrichtung nach Anspruch 16, **dadurch gekennzeichnet, dass** der Zuverlässigkeitswert ein Wert aus einem Intervall zwischen einer einer sicheren Erkennung entsprechenden Zahl, vorzugsweise 1, und der einer nicht erkennbaren Eingabe entsprechenden Zahl, vorzugsweise 0, einschließlich dieser Werte ist.

18. Vorrichtung nach Anspruch 16 oder 17, **dadurch gekennzeichnet, dass** die erkannten Begriffe einen Benutzer beginnend mit dem am zuverlässigsten erkannten Begriff entsprechend ihrer Zuverlässigkeitswerte als Systemrückmeldung angesagt und/oder angezeigt werden.

19. Vorrichtung nach Anspruch 16 oder 17, **dadurch gekennzeichnet, dass** für jeden erkannten Begriff aus einer Liste gespeicherter Datensätze die Datensätze herausgesucht werden, die zu den erkannten Begriffen passen.

20. Vorrichtung nach Anspruch 19, **dadurch gekennzeichnet, dass** bei der Eingabe von Daten entsprechend einer formularartigen Dialogstruktur die Eingabe mit einem zum erkannten Begriff passenden Datensatz vervollständigt wird.

21. Vorrichtung nach Anspruch 20, **dadurch gekennzeichnet, dass** die Vervollständigung der Dateneingabe auf ein Anforderungssignal hin erfolgt.

22. Vorrichtung nach Anspruch 21, **dadurch gekennzeichnet, dass** der Wahrscheinlichkeitswert für einen Datensatz dem Verhältnis der Anzahl der Verwendungen dieses Datensatzes relativ zu der Gesamtzahl der Verwendungen aller Datensätze entspricht.

23. Vorrichtung nach Anspruch 21 oder 22, **dadurch gekennzeichnet, dass** eine Ansage/Anzeigereihenfolge für die Datensätze in Abhängigkeit von ihrem Wahrscheinlichkeitswert und dem Zuverlässigkeitswert des zugeordneten Begriffs festgelegt wird.

24. Vorrichtung nach Anspruch 17 bis 23, **dadurch gekennzeichnet, dass** die erkannten Begriffe einzeln nacheinander oder als Auswahlliste zur Bestätigung oder Auswahl angesagt und/oder angezeigt werden.

25. Vorrichtung nach einem der vorstehenden Ansprüche 16 bis 24, **dadurch gekennzeichnet, dass**, wenn die Eingabe eine Spracheingabe ist, der Zuverlässigkeitswert in bei der Spracherkennung üblicher Weise festgestellt wird.

26. Vorrichtung nach Anspruch 16, **dadurch gekennzeichnet, dass** die Spracheingabe eines Benutzers zunächst einer Sprechererkennung unterworfen wird und dass die anschließende Spracherkennung unter Berücksichtigung des Ergebnisses der Sprechererkennung ausgeführt wird.

27. Vorrichtung nach einem der Ansprüche 16 bis 24, **dadurch gekennzeichnet, dass** die Eingabe über eine alphanumerische Eingabeeinrichtung erfolgt, wobei den so eingegebenen Begriffen zunächst der Zuverlässigkeitswert für eine sichere Erkennung zugewiesen wird.

28. Vorrichtung nach Anspruch 27, **dadurch gekennzeichnet, dass** einem fehlerhaft alphanumerisch eingegebenen Begriff, der bereits häufig benutzerspezifisch fehlerhaft eingegeben wurde, ein in Abhängigkeit von einer eingabespezifischen Fehlerstatistik ein kleinerer Zuverlässigkeitswert zugewiesen wird.

29. Vorrichtung nach Anspruch 27 oder 28, **dadurch gekennzeichnet, dass** ein fehlerhaft alphanumerisch eingegebener Begriff, der bereits häufig benutzerspezifisch fehlerhaft eingegeben wurde, automatisch korrigiert wird, wobei dem korrigierten Begriff ein Zuverlässigkeitswert zugeordnet wird, der kleiner als der Zuverlässigkeitswert für eine sichere Erkennung ist.

30. Vorrichtung nach Anspruch 16 bis 24, **dadurch gekennzeichnet, dass** die Eingabe eine Bildeingabe ist.

## Claims

1. Method for entering data into a system, wherein:
- in response to an entry made by a user, one or more terms matching this entry as precisely as possible is/are identified as recognized terms, the recognized terms being respectively linked to a stored data record, and there being associated with each stored data record a probability value which describes the probability of repeat use of the data record,
- for each of said recognized terms there is determined a reliability value which indicates the degree of recognition of the entry, and
- the terms associated with an entry are further processed, taking into account their reliability values and the probability values,
**characterized in that** a number of found data records can be reduced, according to the reliability values of said data records, through entry of one or more further terms.

2. Method according to claim 1, **characterized in that** the reliability value is a value from an interval between a number, preferably 1, corresponding to a reliable recognition, and the number, preferably 0, corresponding to a non-recognizable entry, including said values.

3. Method according to either of claims 1 or 2,
**characterized in that** the recognized terms are announced and/or displayed, as a system response, to a user, beginning with the term recognized most reliably according to their reliability values.

4. Method according to either of claims 1 or 2,
**characterized in that**, for each recognized term, there are searched, from a list of stored data records, the data records which match the recognized terms.

5. Method according to claim 4, **characterized in that**, in the case of entry of data according to a form-type dialogue structure, the entry is completed with a data record matching the recognized term.

6. Method according to claim 5, **characterized in that** the completion of the data entry is effected in response to a prompt signal.

7. Method according to claim 6, **characterized in that** the probability value for a data record corresponds to the ratio of the number of uses of this data record relative to the total number of uses of all data records.

8. Method according to either of claims 6 or 7,
**characterized in that** an announcement/display sequence for the data records is determined in dependence on their probability value and on the reliability value of the associated term.

9. Method according to any one of claims 2 to 8,
**characterized in that** the recognized terms are announced and/or displayed individually in succession or as a menu for confirmation or selection.

10. Method according to any one of the preceding claims, **characterized in that**, if the entry is a speech entry, the reliability value is determined in a manner that is usual in speech recognition.

11. Method according to claim 10, **characterized in that** the speech entry made by a user is first subjected to speaker-dependent voice recognition, and the subsequent speech recognition is performed on the basis of the result of the speaker-dependent voice recognition.

12. Method according to claims 1 to 9, **characterized in that** the entry is effected via an alphanumeric entry means, the reliability value for a reliable recognition being first assigned to the thus entered terms.

13. Method according to claim 12, **characterized in that** a reliability value that is lesser in dependence on an entry-specific error statistic is assigned to an erroneously entered alphanumeric term that has already been entered frequently in a user-specific, erroneous manner.

14. Method according to either of claims 12 or 13,
**characterized in that** an erroneously entered alphanumeric term that has already been entered frequently in a user-specific, erroneous manner is automatically corrected, there being associated with the corrected term a reliability value which is less than the reliability value for a reliable recognition.

15. Method according to claims 1 to 9, **characterized in that** the entry is an image entry.

16. Device arranged to execute a method for entering data, comprising: means for identifying, in response to an entry made by a user, one or more terms matching this entry as precisely as possible as recognized terms, the recognized terms being respectively linked to a stored data record, and there being associated with each stored data record a probability value which describes the probability of repeat use of the data record, means for determining, for each of said recognized terms, a reliability value which indicates the degree of recognition of the entry, and means for further processing the terms associated with an entry, taking into account their reliability values and the probability values, **characterized in that** a number of found data records can be reduced, according to the reliability values of said data records, through entry of one or more further terms.

17. Device according to claim 16, **characterized in that** the reliability value is a value from an interval between a number, preferably 1, corresponding to a reliable recognition, and the number, preferably 0, corresponding to a non-recognizable entry, including said values.

18. Device according to either of claims 16 or 17,
**characterized in that** the recognized terms are announced and/or displayed, as a system response, to a user, beginning with the term recognized most reliably according to their reliability values.

19. Device according to either of claims 16 or 17,
**characterized in that**, for each recognized term, there are searched, from a list of stored data records, the data records which match the recognized terms.

20. Device according to claim 19, **characterized in that**, in the case of entry of data according to a form-type dialogue structure, the entry is completed with a data record matching the recognized term.

21. Device according to claim 20, **characterized in that** the completion of the data entry is effected in response to a prompt signal.

22. Device according to claim 21, **characterized in that** the probability value for a data record corresponds to the ratio of the number of uses of this data record relative to the total number of uses of all data records.

23. Device according to either of claims 21 or 22,
**characterized in that** an announcement/display sequence for the data records is determined in dependence on their probability value and on the reliability value of the associated term.

24. Device according to claims 17 to 23, **characterized in that** the recognized terms are announced and/or displayed individually in succession or as a menu for confirmation or selection.

25. Device according to any one of the preceding claims 16 to 24, **characterized in that**, if the entry is a speech entry, the reliability value is determined in a manner that is usual in speech recognition.

26. Device according to claim 16, **characterized in that** the speech entry made by a user is first subjected to speaker-dependent voice recognition, and the subsequent speech recognition is performed on the basis of the result of the speaker-dependent voice recognition.

27. Device according to any one of claims 16 to 24,
**characterized in that** the entry is effected via an alphanumeric entry means, the reliability value for a reliable recognition being first assigned to the thus entered terms.

28. Device according to claim 27, **characterized in that** a reliability value that is lesser in dependence on an entry-specific error statistic is assigned to an erroneously entered alphanumeric term that has already been entered frequently in a user-specific, erroneous manner.

29. Device according to either of claims 27 or 28,
**characterized in that** an erroneously entered alphanumeric term that has already been entered frequently in a user-specific, erroneous manner is automatically corrected, there being associated with the corrected term a reliability value which is less than the reliability value for a reliable recognition.

30. Device according to claims 16 to 24, **characterized in that** the entry is an image entry.

## Revendications

1. Procédé pour l'entrée de données dans un système, dans lequel :
- à la suite d'une entrée effectuée par un utilisateur un ou plusieurs termes appropriés le plus exactement possible à cette entrée sont déterminés comme termes identifiés, les termes identifiés sont à chaque fois liés à un jeu de données mémorisé, et une valeur de probabilité est attribuée à chaque jeu de données mémorisé, qui décrit la probabilité d'une nouvelle utilisation du jeu de données,
- une valeur de fiabilité est déterminée pour chacun de ces termes identifiés, qui indique le degré de reconnaissance de l'entrée, et
- les termes attribués à une entrée en tenant compte de leurs valeurs de fiabilité et des valeurs de probabilité seront ensuite traités,
**caractérisé en ce que**, un nombre de jeux de données trouvés correspondant à leurs valeurs de fiabilité peut être réduit par l'entrée d'un ou plusieurs autres termes.

2. Procédé selon la revendication 1, **caractérisé en ce que** la valeur de fiabilité est une valeur à partir d'un intervalle entre un nombre correspondant à une reconnaissance fiable, de préférence 1, et le nombre correspondant à une entrée non reconnaissable, de préférence 0, y compris ces valeurs.

3. Procédé selon la revendication 1 ou 2 **caractérisé en ce que** les termes identifiés commençant par le terme identifié le plus fiable correspondant à leurs valeurs de fiabilité en tant que information en retour au système seront affichés et/ou annoncés à un utilisateur.

4. Procédé selon la revendication 1 ou 2 **caractérisé en ce que** pour chaque terme identifié les jeux de données seront recherchés à partir d'une liste de jeux de données mémorisés, qui correspondent aux termes identifiés.

5. Procédé selon la revendication 4, **caractérisé en ce que** lors de l'entrée de données correspondant à une structure de dialogue sous forme de formulaire l'entrée sera complétée par un jeu de données qui correspond au terme identifié.

6. Procédé selon la revendication 5, **caractérisé en ce que**, l'entrée de données sera complétée à la suite d'un signal de ligne libre.

7. Procédé selon la revendication 6, **caractérisé en ce que** la valeur de probabilité pour un jeu de données correspond à la proportion du nombre des utilisations de ce jeu de données par rapport au nombre total des utilisations de tous les jeux de données.

8. Procédé selon la revendication 6 ou 7, **caractérisé en ce qu'**une suite d'annonces ou d'affichages sera déterminée pour les jeux de données en fonction de leur valeur de probabilité et de la valeur de fiabilité du terme attribué.

9. Procédé selon l'une des revendications 2 à 8, **caractérisé en ce que** les termes identifiés seront annoncés et/ou affichés séparément les uns après les autres ou en tant que liste de sélection afin d'être confirmés ou sélectionnés.

10. Procédé selon l'une des revendications précédentes, **caractérisé en ce que** lorsque l'entrée est une entrée par la voix, la valeur de fiabilité est déterminée en règle générale par la reconnaissance vocale.

11. Procédé selon la revendication 10, **caractérisé en ce que** l'entrée par la voix d'un utilisateur est tout d'abord soumise à une reconnaissance du locuteur et **en ce que** la reconnaissance vocale qui suit sera effectuée en tenant compte du résultat de la reconnaissance du locuteur.

12. Procédé selon la revendication 1 à 9, **caractérisé en ce que** l'entrée s'effectue par un dispositif d'entrée alphanumérique, la valeur de fiabilité pour une reconnaissance fiable est attribuée tout d'abord aux termes ainsi entrés.

13. Procédé selon la revendication 12, **caractérisé en ce qu'**un terme entré par erreur de manière alphanumérique, qui a été au préalable au préalable souvent entré par erreur spécifiquement par l'utilisateur, est attribué à une plus petite valeur de fiabilité en fonction d'une statistique d'erreur liée spécifiquement à l'entrée.

14. Procédé selon la revendication 12 ou 15, **caractérisé en ce qu'**un terme entré par erreur de manière alphanumérique, qui a été au préalable souvent entré par erreur spécifiquement par l'utilisateur, est automatiquement corrigé, une valeur de fiabilité étant attribuée au terme corrigé, laquelle est plus petite que la valeur de fiabilité pour une reconnaissance fiable.

15. Procédé selon la revendication 1 à 9, **caractérisé en ce que** l'entrée est une entrée d'image.

16. Dispositif, lequel est installé, pour exécuter un procédé d'entrée de données, avec lequel :
- à la suite d'une entrée effectuée par un utilisateur un ou plusieurs termes appropriés le plus exactement possible à cette entrée sont déterminés en tant que termes identifiés, et chacun des termes identifiés est lié à un jeu de données mémorisé et une valeur de probabilité est attribuée à chaque jeu de données mémorisé, laquelle décrit la probabilité d'une nouvelle utilisation du jeu de données,
- des moyens effectuent un test d'une valeur de fiabilité pour chacun des termes identifiés, laquelle indique le degré de reconnaissance de l'entrée, et des moyens pour le traitement ultérieur des termes attribués à une entrée en fonction de leurs valeurs de fiabilité et des valeurs de probabilité,
**caractérisé en ce que**, un nombre de jeux de données trouvés correspondant à leurs valeurs de fiabilité peut être réduit par l'entrée d'un ou de plusieurs autres termes.

17. Dispositif selon la revendication 16, **caractérisé en ce que** la valeur de fiabilité est une valeur à partir d'un intervalle entre un nombre correspondant à une reconnaissance fiable, de préférence 1, et le nombre correspondant à une entrée non reconnaissable, de préférence 0, y compris ces valeurs.

18. Dispositif selon la revendication 16 ou 17 **caractérisé en ce que** les termes identifiés commençant par le terme identifiés le plus fiable correspondant à leurs valeurs de fiabilité en tant que message de retour au système seront affichés et/annoncés à un utilisateur.

19. Dispositif selon la revendication 16 ou 17 **caractérisé en ce que** pour chaque terme identifié les jeux de données seront recherchés à partir d'une liste de jeux de données mémorisés, qui correspondent aux termes identifiés.

20. Dispositif selon la revendication 19, **caractérisé en ce que** lors de l'entrée de données correspondant à une structure de dialogue sous forme de formulaire l'entrée sera complétée par un jeu de données qui correspond au terme identifié.

21. Dispositif selon la revendication 20, **caractérisé en ce que** l'entrée de données sera complétée à la suite d'un signal de ligne libre.

22. Dispositif selon la revendication 21, **caractérisé en ce que** la valeur de probabilité pour un jeu de données correspond à la proportion du nombre des utilisations de ce jeu de données par rapport au nombre total des utilisations de tous les jeux de données.

23. Dispositif selon la revendication 21 ou 22, **caractérisé en ce qu'**une suite d'annonces / d'affichages pour les jeux de données est déterminée en fonction de leur valeur de probabilité et de la valeur de fiabilité du terme associé.

24. Dispositif selon la revendication 17 à 23, **caractérisé en ce que** les termes identifiés seront annoncés et/ou affichés séparément les uns après les autres ou en tant que liste de sélection afin d'être confirmés ou sélectionnés.

25. Dispositif selon l'une des revendications précédentes 16 à 24, **caractérisé en ce que** lorsque l'entrée est une entrée par la voix, la valeur de fiabilité est déterminée en règle générale par la reconnaissance vocale.

26. Dispositif selon la revendication 16, **caractérisé en ce que** l'entrée par la voix d'un utilisateur est tout d'abord soumise à une reconnaissance du locuteur et **en ce que** la reconnaissance vocale qui suit sera effectuée en tenant compte du résultat de la reconnaissance du locuteur.

27. Dispositif selon l'une des revendications 16 à 24, **caractérisé en ce que** l'entrée s'effectue par un dispositif d'entrée alphanumérique, la valeur de fiabilité pour une reconnaissance fiable étant attribuée tout d'abord aux termes ainsi entrés.

28. Dispositif selon la revendication 27, **caractérisé en ce qu'**un terme entré par erreur de manière alphanumérique, qui a été au préalable souvent entré par erreur spécifiquement par l'utilisateur, est attribuée à une plus petite valeur de fiabilité en fonction d'une statistique d'erreur liée spécifiquement à l'entrée.

29. Dispositif selon la revendication 27 ou 28, **caractérisé en ce qu'**un terme entré par erreur de manière alphanumérique, qui a été au préalable souvent entré par erreur spécifiquement par l'utilisateur, est automatiquement corrigé, une valeur de fiabilité étant attribuée au terme corrigé, laquelle est plus petite que la valeur de fiabilité pour une reconnaissance fiable.

30. Dispositif selon la revendication 16 à 24, **caractérisé en ce que** l'entrée est une entrée d'image.
